# EUROPEAN PATENT APPLICATION

(11) **EP 4 072 073 A1**
(43) Date of publication of application: **12.10.2022**
(21) Application number: 21166875.1
(22) Date of filing: 06.04.2021
(51) Int. Cl.: H04L 12/24

(54) **ARRANGEMENT FOR DETECTING CONFLICTS IN NETWORK CONFIGURATIONS**

(71) Applicant: Nokia Solutions and Networks Oy, 02610 Espoo (FI)
(72) Inventor: HANNÁK, Gábor, 1083 Budapest (HU)
(74) Representative: Papula Oy

(57) **Abstract**

An arrangement for detecting a conflict in network configurations. Communication networks are configured using intents and policies that change the behavior of the network. These networks include a very large number of parameters that can be changed. The arrangement detects possible conflicts between different configurations before they are applied so that conflicts can be avoided. This is achieved by determining measured values relating to changes in configurations and comparing the measured values between different configurations.

## Description

The following disclosure relates to network configuration management. More specifically, the following disclosure relates to at least partially intent-based network configuration management.

Conventionally, data communication, mobile communication and other telecommunication networks have been configured using policies. In practice, policies are collections of rules that govern the behavior of network connected devices. Using policies, network administrators can control how network connected devices, including network elements and connected end user devices, behave in a network. Policies can be, for example, device user or application based. For example, it is possible to set a policy wherein certain devices or applications get a priority over others. Furthermore, the location may be an attribute for different policies. Policies may be used for limiting different data types and giving priority to others. In addition to data transfer rates, policies may be used in controlling security functions. For example, a policy may prevent use of certain applications or data types if the device is not in an appropriate location or the connection is considered to be unsafe. Policies provide a possibility for automated configuration so that system administrators do not need to change the configuration manually when the situation in the network changes. It is possible that applied policies do have a small or very extensive effect on the network behavior. Thus, the number of measurable changes may be high or very high.

More modern approaches may also use so called intent based configuration. In an intent based configuration arrangement, the network administrator provides an intent, for example, setting a specific service in a specific area, increasing capacity for certain use cases, reducing energy consumption in an area or other similar intent. Thus, instead of providing instructions on how to achieve the intended goal, the administrator provides only the goal and then the network chooses policies, instructions or rules to achieve this intent. Thus, there is a logic that translates the intent into a set of configuration rules. The arrangement generating the rules may have several possibilities to achieve the same intended goal. Thus, it is possible that the generated rules are not always optimal and may be conflicting with earlier intents or policies.

Modern networks are complicated and involve a large number of intents, policies and even individual rules. There is a constant risk of conflicting configurations that reduce the efficiency, usability, throughput and similar measures of the network, causing the network to operate in a suboptimal way. Furthermore, applying conflicting configurations increases occurrence of interference and other adverse effects in the network.

### SUMMARY

In the following disclosure, an arrangement for detecting a conflict in network configurations is disclosed. Communication networks are configured using intents and policies that change the behavior of the network. These networks include a very large number of parameters that can be changed. The arrangement detects possible conflicts between different configurations before they are applied so that conflicts can be avoided. This is achieved by determining measured values relating to changes in configurations and comparing the measured values between different configurations.

In an aspect, a network element is disclosed. The network element comprises at least one processor; and at least one memory including computer program code. The at least one memory and the computer program code are configured, with the at least one processor, to cause the network element to: receive a network configuration instruction; generate a set of actions in accordance with the received configuration instruction; acquire at least one measured value related to the generated set of actions; compare the at least one measured value to at least one measured value related to an earlier network configuration instruction; and determine a conflict based on the comparison result.

It is beneficial to determine the measured values that are affected because of changes in the network configuration. When the measurable effect of the change can be determined in advance, it is possible to determine whether there is a conflict between an earlier configuration and intended changes. The conflict may have an adverse effect on the network functionality and it is preferable to determine already in advance if this may be the case.

In an implementation, the received instructions comprise an intent or a policy. It is beneficial to do the determination for all intents and policies as they are often so complicated that their effect and particularly the possible side effects are difficult to predict.

In an implementation, the at least one memory and the computer program code are further configured, with the at least one processor, to cause the network element to generate a set of actions according to received configuration instructions based on intent, wherein the network element is further configured to analyze the intent and determine actions needed to fulfil the requirements of the intent. It is beneficial to generate a set of actions that are sufficient to fulfill the intent. When the set of actions is determined, it is possible to determine which measured values are affected.

In an implementation, the at least one memory and the computer program code are further configured, with the at least one processor, to cause the network element to acquire the at least one measured value by determining values related to each of the actions. It is beneficial to determine each measured value action by action, so that it is possible to determine if some actions eliminate or strengthen an already earlier detected change.

In an implementation, the at least one memory and the computer program code are further configured, with the at least one processor, to cause the network element to store the determined measured values into a memory. The use of storage, cache or the like is beneficial in cases wherein the set of actions is generated earlier or the change is a policy. Then, the determined measured values may be stored for later use.

In an implementation, the at least one memory and the computer program code are further configured, with the at least one processor, to cause the network element to retrieve the measured values related to each of the actions from a database. If the prevailing conditions are similar, it is possible to retrieve at least some of the measured values from a database, storage or the like and there is no need to repeat the complicated determination procedure.

In an implementation, the at least one memory and the computer program code are further configured, with the at least one processor, to cause the network element to prevent the application of the generated set of actions as a response to the determined conflict. It is beneficial that the system automatically prevents application of a configuration that may cause a conflict.

In an implementation, the at least one memory and the computer program code are further configured, with the at least one processor, to cause the network element to provide a conflict report for an administrator as a response to the determined conflict. It is beneficial to provide a warning message or the like as a report of potential conflict. The administrator may then either approve or prevent the changes.

In other aspects, the functionality described above is implemented as a method or a computer program configured to cause the execution of the method.

In another aspect a network element is disclosed. The network element comprises means for receiving a network configuration instruction; means for generating a set of actions in accordance with the received configuration instruction; means for acquiring at least one measured value related to the generated set of actions; means for comparing the at least one measured value to at least one measured value related to an earlier network configuration instruction; and means for determining a conflict based on the comparison result.

### BRIEF DESCRIPTION OF THE DRAWINGS

The accompanying drawings, which are included to provide a further understanding of the arrangement for detecting a conflict in a network and constitute a part of this specification, illustrate examples and together with the description help to explain the principles of the arrangement for detecting a conflict in a network. In the drawings:
**Fig. 1** is an example illustration explaining the arrangement for detecting a conflict in a network; and
**Fig. 2** is an example of a method for detecting a conflict in a network.

### DETAILED DESCRIPTION

Reference will now be made in detail to the example embodiments, examples of which are illustrated in the accompanying drawings.

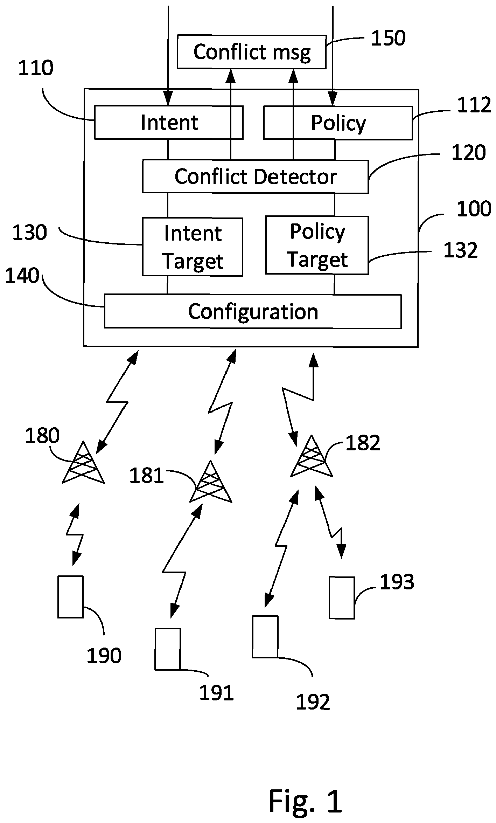

Fig. 1 is an example illustration explaining the basic principles of an arrangement for detecting conflicts in network configurations. In the example of Fig. 1, a controller 100 is connected to a network. In this example the network is illustrated by three base stations 180 - 182 and four user devices 190 - 193. The mobile communication network of Fig. 1 is just a simplified example. Typically, managed networks comprise a very large number of network elements and connected user devices. However, configurations may also be local, so they do not necessarily affect the whole network, but a few cells, base stations, network elements, users or the like. Thus, the possible conflicts and interferences may also be local because of local configurations.

In the example of Fig. 1 the controller 100 is controlling network configurations. In the example of Fig. 1 the controller is a computing arrangement comprising at least one processing unit configured to execute computer program code, at least one memory configured to store computer program code and related data and necessary network connections. It is possible to implement the controller using a plurality of computing devices that are operating together according to the principles discussed in the following. Furthermore, instead of just a simple memory, the controller may use one or more databases as will be explained in the following example.

The controller 100 comprises separate inputs for receiving intents 110 and policies 112. It is possible to implement the controller so that only one input is used for both intents and policies and there may be separate inputs according to specific user groups. For example, a maintenance man solving local problems may have a separate input. In Fig. 1, two inputs are shown; however, it is common that only one of them receives an input. For example, when the network configuration changes, it is typically done using one intent indication or policy. However, the earlier received intents and policies may be still active or waiting the activation.

The received intents and policies are provided to a conflict detector 120. The conflict detector is an arrangement that compares the behavior of the network after intents and policies have been activated. In order to do the comparison, the conflict detector 120 needs to know how the received intent or policy changes the behavior of the network. This is detected by determining values that can be measured and are affected by the change. In the following, the expression of the measured value is used for such values.

In order to determine the measured values, the conflict detector 120 needs to know how the intent is implemented or which changes a policy will apply. A policy is more static and it is possible to generate a database comprising affected measured values for different policies. Furthermore, there may be a definition of how the measured value will change because of the policy. In the example of Fig. 1, this information is stored in a policy target database 132 and the conflict detector 120 is configured to retrieve the list of affected values from there.

When the conflict detector 120 receives an intent, the received intent needs first to be translated into a set of rules. This is achieved by sending the received intent into an intent target generator 130. It is possible that the intent target generator 130 is an arrangement that generates the set of rules. However, it is also possible that the intent target generator 130 is an interface to another module in a network configuration arrangement. If the target generator 130 is only an interface, it receives the set of rules from another component being a part of the same network management arrangement, so that the rules on how the network is going to implement the intent are the same as analyzed by the conflict detector 120. The intent is implemented by using a set of rules that have been generated by the entity that is responsible for executing the intent. Then, the rules are analyzed in a similar manner as with the policies by determining a list of measured values. The analysis may include several different approaches. For example, there may be collected statistics, a machine learning entity that has been trained using intents and measured values that have been verified by measurements, a simulation or a similar approach.

In the example above, the list of measured values based on one intent and one policy has been explained. However, it is possible to have a similar analysis for two different intents or a higher number of intents and policies. Thus, the controller 100 receives intents and policies that will be compared against each other and earlier received intents and policies. They may be received simultaneously or only after a longer period. The analysis performed by the conflict detector 120 may comprise comparing the received sets of measured values. If the sets include same measured values, the network administrator and/or the person placing the intent or policy will be informed first about a conflict using a conflict message 150. In addition to informing, the applied changes may be prevented and subjected to a further approval.

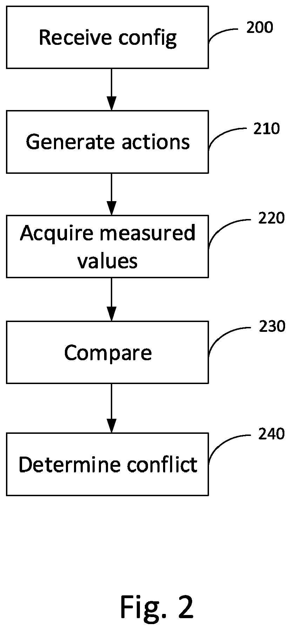

In Fig. 2, an example of a method for managing conflicts is shown. The method starts by receiving configuration instructions, step 200. This may be a new intent or a new policy that will be activated on top of the earlier configurations. Thus, the intent or policy may be instructions to change the network configuration with regard to some location, service or other portion of the configuration. The received configuration instructions are typically not instructions that cover the whole operation of the network.

In the example of Fig. 2, the received configuration instructions are an intent of changing a network configuration. This may be, for example, reducing power consumption or optimizing data transfer rates per user in a particular area.

The received intent is then processed and a set of actions is generated, step 210. These actions are able to implement the intent in the network. The set of actions is based on the current context, i.e., the state of the network. An intent is used in cases wherein the operator is willing to give the network an instruction on what needs to be achieved but not explaining how. Thus, the generated set of actions may vary, because the current conditions in the network vary. Furthermore, there may be more than one possibility to implement the intent. The generated set of actions may also have an impact on different measured values which are acquired for determining a possible conflict, step 220. The acquiring step may include using a cache or a storage for storing the set of actions. If a corresponding set of actions has been processed, it is possible to retrieve the measured values from the storage, such as a database or other memory location. However, it is possible that the generated set of actions is novel and it is necessary to determine the measured values that may change or have changed in the process. The measured values may be determined by analyzing or simulating the changes that are required to implement the intent.

The acquired measured values are then compared to the earlier acquired measured values, step 230. For example, if an administrator places a first intent and later during the day another administrator places a second intent or a policy, the measured values of the second intent or the policy are compared against the measured values of the first intent.

If the comparison result shows that the first intent and the second intent or the policy have an effect with regard to at least one common measured value, then a possible conflict is determined, step 240. The determination based on the simple existence of the same measured values may be improved using more sophisticated techniques. For example, it may be possible to determine how much a conflicting measured value changes because of the new configuration. If the change is very small, it may be in some cases ignored. Furthermore, in some occasions it is possible to use problem solving methods that try to find an alternative set of actions for implementing the intent so that the conflict can be eliminated.

In the example of Fig. 2, an intent was received as a network configuration instruction. Instead of an intent, it is possible to receive a policy that is more static by nature. In case of a policy, generating actions may be simpler and include, for example, generating actions for transmitting rules for the necessary network elements and other devices. A policy is more static in this sense, while an intent is more dynamic. Furthermore, a policy is typically decided by the administrator as changes to the technical settings of the network so that the changes cause the network to change the behavior. The intent involves computer generated settings that cause the network to change the behavior.

In the following, one practical example for a better understanding of the examples of Fig. 1 and 2 will be given. In the example, the following tables will be discussed:

**Table 1: Intents.**

| **Intent** | Affected values |
|---|---|
| | |
| Intent A | {a,b} |
| Intent B.1 | {c,d} |
| Intent B.2 | {c,e,f} |
| ... | |
| Intent Z | {h,i,j,k} |

**Table 2: Policies.**

| **Policy** | Affected values |
|---|---|
| | |
| Policy A | {e, f} |
| Policy B | {c,d} |
| Policy C | {d,f,g} |
| ... | |
| Policy Z | {m,n,o,p} |

The two tables shown above are provided for a better understanding of the description. It should be understood that such tables may be available; however, they are not necessarily needed as will be disclosed below. The values in the table may be configuration parameters of the network functions, Performance Management (PM) counters, QoS/QoE metrics, latency values, failure counters and any other observed or derived metric and their combination that refers to the state of the network or the fulfillment of the intent or policy.

Now, if an administrator is wishing to implement a change in a network configuration using an intent, the following method is possible in accordance with the example of Fig. 2. Table 1 discloses examples of different intents and which measured values they directly affect. In the example, the administrator is wishing to choose intent B, which may be, for example, an intent to optimize energy efficiency of the cells within a given area. Now, the table shows two options, B.1 and B.2, which are to indicate that there are two options available to optimize in this example. These two options are different from each other and thus have a different list of affected measured values. Now, when the controller receives an intent, it will generate a list of actions to fulfill the requirements of the intent. In this example, the controller generates a set of actions corresponding to intent B.2. Thus, values {c,e,f} are affected. Now these measured values are compared to measured values of an earlier configuration. The administrator is notified if the same measured values are found. In a more advanced implementation, it is also possible to determine the significance of the change. For example, if value c is present in both, then it may be determined whether the change is minor or significant and only significant ones are shown to the operator. This decision may be based, for example, on real measurements, or a table provides a list of values that are always significant.

Now the optimization in given cells is applied through the cells in the given area. A second configuration instruction is given. The second configuration instruction may be given by a same administrator or a different administrator. The administrator provides policy C to the controller. In this example, policy C may be, for example, a policy to turn on mobility load balancing in one of the cells in the given area. This cell was optimized with regard to energy efficiency according to intent B.2. The mobility load balancing adjusts handover threshold parameters between neighboring cells in order to achieve a more balanced distribution between the cells. This policy is again turned into a set of actions that is applied within the cell and neighboring cells. It can be seen in table 2 that the relevant measured values for policy C are {d,f,g}. Earlier it was determined that the relevant measured values for Intent B.2 are {c,e,f}. It can be noted that measured value f is relevant for both intent B.2 and policy C.

As the comparison result shows a possible conflict, the controller provides conflict information to the administrator trying to apply this policy. Instead of providing the information, the controller evaluates the significance of the conflicting parameter. Furthermore, if determined actions for certain intents have been stored into a database or other storage, it is possible to go through optional implementations for the same intent. In the present example it is seen that there are two options for intent B. If these have been stored into a database, the controller may inform the administrator that the policy may be implemented if the earlier implemented intent is changed to another one.

As stated above, the components of the exemplary embodiments can include a computer readable medium or memories for holding instructions programmed according to the teachings of the present inventions and for holding data structures, tables, records, and/or other data described herein. A computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, a RAM, a PROM, an EPROM, a FLASH-EPROM, any other suitable memory chip or cartridge, a carrier wave or any other suitable medium from which a computer can read.

As used in this application, the base station and/or user equipment may comprise a circuitry. The term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and/or processor(s), such as microprocessor(s) or a portion of microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

An example of an access architecture that may be applied may be e.g. a radio access architecture based on long term evolution advanced (LTE Advanced, LTE-A) or new radio (NR, 5G), without restricting, however, the example embodiments to such an architecture. It is obvious for a person skilled in the art that the example embodiments may also be applied to other kinds of communications networks having suitable means by adjusting parameters and procedures appropriately.

It is obvious for a person skilled in the art that the depicted system is only an example of a part of a radio access system and in practice, the system may comprise a plurality of (e/g)NodeBs, the user equipment may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

It is obvious to a person skilled in the art that with the advancement of technology, the basic idea of the arrangement for detecting a conflict in a network may be implemented in various ways. the arrangement for detecting a conflict in a network and its example embodiments are thus not limited to the examples described above; instead they may vary within the scope of the claims.

## Claims

1. A network element comprising:
at least one processor; and
at least one memory including computer program code, the at least one memory and the computer program code being configured, with the at least one processor, to cause the network element to:
receive a network configuration instruction;
generate a set of actions in accordance with the received configuration instruction;
acquire at least one measured value related to the generated set of actions;
compare the at least one measured value to at least one measured value related to an earlier network configuration instruction; and
determine a conflict based on the comparison result.

2. The network element according to claim 1, wherein the received instructions comprise an intent or a policy.

3. The network element according to claim 1 or 2, wherein the at least one memory and the computer program code are further configured, with the at least one processor, to cause the network element to:
generate a set of actions according to received configuration instructions based on intent, wherein the network element is further configured to analyze the intent and determine actions needed to fulfil the requirements of the intent.

4. The network element according to claim 1, 2 or 3, wherein the at least one memory and the computer program code are further configured, with the at least one processor, to cause the network element to acquire the at least one measured value by determining values related to each of the actions.

5. The network element according to claim 4, wherein the at least one memory and the computer program code are further configured, with the at least one processor, to cause the network element to store the determined measured values into a memory.

6. The network element according to any of claims 1 to 3, wherein the at least one memory and the computer program code are further configured, with the at least one processor, to cause the network element to retrieve the measured values related to each of the actions from a database.

7. The network element according to any of claims 1 to 6, wherein the at least one memory and the computer program code are further configured, with the at least one processor, to cause the network element to prevent the application of the generated set of actions as a response to the determined conflict.

8. The network element according to any of claims 1 to 7, wherein the at least one memory and the computer program code are further configured, with the at least one processor, to cause the network element to provide a conflict report to an administrator as a response to the determined conflict.

9. A method comprising:
receiving a network configuration instruction;
generating a set of actions in accordance with the received configuration instruction;
acquiring at least one measured value related to the generated set of actions;
comparing the at least one measured value to at least one measured value related to an earlier network configuration instruction; and
determining a conflict based on the comparison result.

10. A method according to claim 9, wherein the method further comprises generating a set of actions according to received configuration instructions based on intent, wherein the method further comprises analyzing the intent and determining actions needed to fulfil the requirements of the intent.

11. A method according to claim 9 or 10, wherein the method further comprises acquiring the at least one measured value by determining values related to each of the actions.

12. A method according to claim 11, wherein the method further comprises storing the determined measured values into a memory.

13. A method according to claim 9 or 10, wherein the method further comprises retrieving the measured values related to each of the actions from a database.

14. A method according to any of claims 9 - 13, wherein the method further comprises providing a conflict report to an administrator as a response to the determined conflict.

15. A computer program product comprising computer program code, wherein the computer program code is configured to cause performing a method according any of claims 9 - 14, when the computer program code is executed by a computing device.
